Europäisches Patentamt

European Patent Office

Office européen des brevets

(11) Publication number: **0 060 677**
**A1**

# EUROPEAN PATENT APPLICATION

(21) Application number: **82301218.2**

(22) Date of filing: **10.03.82**

(51) Int. Cl.³: **B 01 D 39/16**

(30) Priority: **13.03.81 US 243372**

(43) Date of publication of application: **22.09.82**
**Bulletin 82/38**

(84) Designated Contracting States: **BE DE FR GB IT**

(71) Applicant: **AMSTED Industries Incorporated,
3700 Prudential Plaza, Chicago, Ill.60601 (US)**

(72) Inventor: **Reid, Harry E., 33055 Summers, Livonia
Michigan (US)**

(74) Representative: **Boyes, Kenneth Aubrey et al, Frank B.
Dehn & Co. Imperial House 15-19 Kingsway, London
WC2B 6UZ (GB)**

(54) **Composite filter media.**

(57)    A filter media (16) for separating foreign materials in a fluid may be made by combining layers (18, 20, 22) of permeable material into a composite. By using materials having different characteristics, the composite can be customized to ensure that particular foreign materials are most effectively removed from a particular fluid.

## BACKGROUND OF THE INVENTION

### Field of the Invention

This invention relates to filtering foreign materials from a fluid and more particularly to a composite filter media which may be used to effectuate this desired separation.

### Description of the Prior Art

Filter media is well known and has many consumer, commercial and industrial uses. Such media is used in the simple task of making coffee in a home or restaurant, collecting airborne particulate in a discharge from a power plant boiler, and separating foreign materials in a liquid flow. Filter media may be of a permanent type to allow further use after cleaning or disposable wherein it is discarded after use.

A baghouse filter device is a type commonly used to separate particulate from a gaseous flow.

For separating foreign materials in a liquid flow, the filter media may be used in conjunction with a flat bed type filter. In this type of filter device, the media is periodically drawn over a horizontal supporting screen or grid panel, for example see U.S. Patent Nos. 4,137,175 and 4,159,247.

A second type of liquid filter device, where filter media is used to effect liquid-foreign material separation, has a horizontal supporting screen which connects with an inclined ramp. Early examples of this filter type are

0060677

disclosed in U.S. Patent Nos. 3,087,620 and 3,091,336. Commercial versions of this filter type are sold by the assignee herein under the trade name HYDRO-VAC.

In the inclined ramp type filter the filter media is not only carried on the supporting screen but also on the inclined ramp. A conveying mechanism in turn is in contact with the media sheet on its inlet side. The conveyor is periodically energized to advance an unused portion of the media sheet over the screen and concurrently transport the media sheet and foreign material collected thereon up the inclined ramp for disposition external of the filter device. As may be appreciated, filter media usable in the inclined ramp type filter device must have improved physical characteristics over that media usable in a flat bed type filter.

In liquid filtering where the particle size of the foreign material is unusually small, i.e. proximately 5 microns, the filter media is typically precoated with a thin layer of diatomaceous earth or chopped cellulose fibers.

All such filter media, regardless of whether it is used in a gaseous or liquid environment, must be permeable. Presently such materials as, for example, cotton, rayon fibers, synthetic fibers of nylon or polyester, and blends of synthetic and cellulose fibers are used to make a filter media. Note that cotton and rayon were first used to make fabrics. Because these fabrics were permeable and readily available, each was subsequently adapted as filter media. Except for cotton, the other materials are typically available in nonwoven constructions.

SUMMARY OF THE INVENTION

Filter media of this invention comprises a joining of layers of different materials into a composite. Each layer provides various functions resulting in the composite producing results in excess of the sum of the individual layers.

The choice of materials is based on a balancing of three major considerations. The first consideration is the nature of the fluid. Where the fluid is a gas, the inlet temperature and pressure of the gas must be taken into account. Also to be considered is whether the gas is chemically active or inert and whether it is toxic. Where the fluid is a liquid, its temperature, viscosity and chemical nature, i.e. whether the liquid is alkaline, acidic or organic base, must be considered.

The next major consideration is the nature of the foreign material to be retained by the filter media. In most all cases the foreign materials comprise a mixture of various foreign matter. Factors to be considered are range of particle size, range of percentage concentration in the

- 4 -

0060677

fluid, and physical characteristics of the foreign material. For example, the foreign material can be a solid particulate, semi-solid, i.e. a sludge, a liquid, i.e. tramp oil, or combinations thereof.

The last major consideration is cost. The volume of fluid to be processed in a given time period must be considered in light of equipment and operating costs. When a permanent filter media is to be used, its cost can be negligible. However, such media must be able to be readily cleaned. Because of the cleaning problem, permanent media has more limited uses. When disposable filter media is to be used, the amount required and its cost per square yard can be a substantial portion of the operating costs. In liquid filtration, elimination of the need to use a filter aid such as diatomaceous earth or chopped cellulose fibers also must be considered.

By combining layers of such materials as cotton, rayon fibers, synthetic fibers, blends of synthetic fibers and cellulose fibers, paper, and reticulated, i.e. open pore and nonreticulated polyurethane foam into a composite, a filter media may be so constructed to minimize the cost element of filtration in view of all other considerations.

## DESCRIPTION OF THE DRAWINGS

FIG. 1 is a fragmentary perspective view of a 2-ply composite filter media of this invention.

FIG. 2 is a fragmentary perspective view of a 3-ply composite filter media of this invention.

FIG. 3 is a schematic depicting two permeable materials being typically joined into a composite filter media sheet.

FIG. 4 is a cross-sectional explosion view of the sheet of FIG. 3 as the sheet emerges after joinder.

### DESCRIPTION OF THE PREFERRED EMBODIMENT

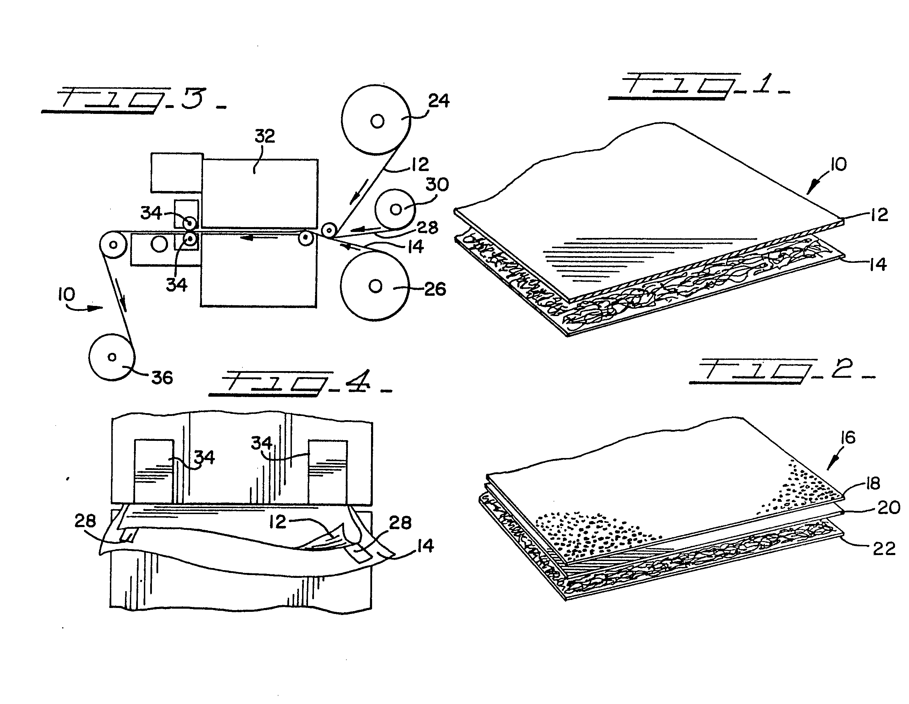

In FIG. 1, a portion of a composite filter media is shown generally in sheet form and designated 10. The sheet 10 is 2-ply and comprises an upper or inlet side layer 12 and a lower or outlet side layer 14 which have been joined together.

In this case, the upper layer 12 is a filter paper consisting of randomly orientated wood fibers joined by an acrylic binder. The degree of permeability of the paper selected is based on the range of the particle size of the foreign matter in the fluid. Other materials usable for the upper layer 12 are rayon fibers and polyurethane foam.

The layer 12 must be able to retain the foreign matter while at the same time allowing the fluid to pass through and be discharged accordingly. Filter papers are usable where the particle size varies from 2 to 50 microns. While rayon and polyurethane foam do not efficiently retain particles of this small size, these two other materials have a more lofty cross-sectional structure. In a liquid environment, this lofty structure is particularly useful for retaining tramp oils because the structure allows more extended use before blinding off.

The lower layer 14 may be lightweight, for example 0.6-0.8 $oz/yd^2$, and made of synthetic fibers of nylon or polyester. The lower layer 14 adds little filtering capability to the composite 10 and mainly provides the necessary strength to the composite 10 to be usable in a inclined ramp type filter device, for example.

Note that filter paper and polyurethane foam are both fragile in nature. However, both are usable as the upper layer 12 for the composite filter media 10 used in an inclined ramp type filter device. The lower layer 14 adds sufficient strength to the composite 10 to allow the conveyor in this device to interact with the upper layer 12 to advance the composite sheet 10. A composite 10 of a rayon fiber upper layer 12 and a synthetic fiber lower layer 14 also would be usable in an inclined bed type filter device, for example.

Where the foreign matter consists of solid particulate and traces of oil in a liquid flow, the 2-ply disposable media sheet 10 could be made with an upper layer 12 having improved oil retention, for example of a woven cotton, rayon, a polyester-cellulose blend or polyurethane foam.

Then the lower layer 14 could be made of synthetic fibers for retaining the solid particulate. The weight of the lower layer 14 would be selected on the basis of the range of the particle size of the solid paticulate. Synthetic fibers, i.e. nylon or polyester, have an affinity for oil. A media made of either such material quickly blinds off·in the presence of oil and consequently offers limited filtering capacity. Therefore, by use of an upper layer 12 having good oil retention qualities, the efficiency of the lower layer 14 for solid particulate retention is greatly enhanced.

As seen in FIG. 2, a portion of a further composite filter media is shown generally in sheet form and designated 16. The sheet 16 is 3-ply and comprises an upper or inlet side layer 18, a middle layer 20, and a lower or outlet side layer 22. Again, selection of the material to be used in a particular layer depends on the nature of the fluid, the nature of the foreign matter in the fluid, and the type of filter device. These three factors are then balanced against cost.

Where the 3-ply composite filter media sheet 16 is to be used in an inclined bed type filter device and the foreign material includes metal chips and traces of oil in a water base flow, the middle layer 20 could be a polyurethane foam or rayon fibers sandwiched between the upper and lower layers 18, 22 of lightweight synthetic fibers. The upper and lower layers would provide sufficient strength to the media sheet 16 as well as retain the metal chips. The middle layer of polyurethane foam or rayon fibers would retain the traces of oil.

Where the foreign material further includes metal fines, the lower layer 22 could be of a heavier weight and also made of synthetic fibers or a blend of polyester and cellulose fibers. As can be appreciated, a number of combinations of materials in varying weights, i.e. degrees of permeability, can be combined to meet a particular need.

As seen in FIGS. 3 and 4, the 2-ply composite filter media sheet 10 is being fabricated by drawing the upper layer 12 from a first roll 24 and the lower layer 14 from a second roll 26. Strips of thermoplastic tape 28 from a pair of spaced rolls 30 are fed between the upper and lower layers 12, 14. A machine 32 having heated rollers 34 activates the tape strips 28 to join the layers 12, 14 into the composite 10 which then is reeled into a rolled package 36. The strips 28 are located inwardly proximately 3 inches from the edges of the layers 12, 14 and spaced proximately 24 inches apart. Additional strips 28, therefore, are used when the composite sheet 10 exceeds 36 inches in width. Use of the above-described method of fabrication is particularly useful for joining a layer of filter paper to a layer of synthetic fibers.

To join a layer of polyurethane foam to a layer of synthetic fibers, flame bonding can be used wherein heat is applied across the entire width of the composite sheet 10 to form an uninterrupted bond. In fabricating the 3-ply composite 16, the bonding may be done in one or two steps depending on the materials used for each of the layers 18, 20, 22.

It should be understood that after bonding is completed, the sheet may be used to make filters of varying configurations, for example into an elongated bag.

While various modifications may be suggested by those versed in the art, it should be understood that I wish to embody within the scope of the patent warranted hereon all such modifications as reasonably and properly come within the scope of my contribution to the art.

0060677

WHAT IS CLAIMED IS:

1. A filtering system for processing a fluid flow containing foreign materials, said system including composite filter media means, an improvement in said composite filter media means comprising,

an inlet side filter layer made of a permeable material selected from a group consisting of polyurethane foam and filter paper, and

an outlet side support layer joined to said inlet side layer, said outlet side layer made of a permeable material selected from a group consisting of synthetic fibers and a blend of synthetic fibers and cotton,

wherein said permeable materials in said composite filter media means are chosen to most efficiently retain said foreign materials in said fluid flow while allowing said fluid to pass therethrough.

2. A filtering system for processing a fluid flow containing foreign matter, said system including composite filter media means, an improvement in said disposable composite filter media means comprising,

an inlet side support layer made of a permeable material selected from a group consisting of synthetic fibers and a blend of synthetic and cellulose fibers,

a middle filter layer joined to said inlet side support layer and made of a permeable material selected from a group consisting of filter paper and polyurethane foam, and

an outlet side support layer joined to said middle layer and made of a permeable material selected from a group consisting of synthetic fibers and a blend of polyester and cellulose fibers,

wherein said permeable materials in said composite filter media means are chosen to most efficiently retain said foreign matter in said fluid flow while allowing said fluid to pass therethrough.

0060677

FIG-1.

10 · 12 · 14

FIG-2.

16 · 18 · 20 · 22

FIG-3.

24 · 12 · 30 · 28 · 14 · 26 · 32 · 34 · 34 · 36 · 10

FIG-4.

28 · 14 · 34 · 12 · 34 · 28

## DOCUMENTS CONSIDERED TO BE RELEVANT

| Category | Citation of document with indication, where appropriate, of relevant passages | Relevant to claim |
|---|---|---|
| A | US - A - 4 231 768 (C.F. SEIBERT et al.)<br>* claim 10 *<br>-- | |
| A | US - A - 4 239 516 (M. KLEIN)<br>* claims 1, 4 *<br>& GB - A - 2 015 056<br>-- | |
| A | DE - U - 7 021 841 (C. RIPKEN)<br>* claims 3, 15 *<br>-- | |
| P,A | DE - A1 - 2 940 712 (H. PFENNIG)<br>* page 8, paragraph 2 to page 13, paragraph 4; fig. 1, 2 *<br>---- | 1,2 |

**CLASSIFICATION OF THE APPLICATION (int. Cl. 3)**

B 01 D 39/16

**TECHNICAL FIELDS SEARCHED (Int.Cl. 3)**

B 01 D 39/14

B 01 D 39/16

B 01 D 39/18

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 12-05-1982 | KÜHN |

EPO Form 1503 03.78